# EUROPEAN PATENT SPECIFICATION

(11) **EP 3 643 566 B1**
(45) Date of publication and mention of the grant of the patent: **09.06.2021**
(21) Application number: 19205214.0
(22) Date of filing: 24.10.2019
(51) Int. Cl.: B60R 21/231, B60R 21/233

(54) **SIDE AIRBAG**
SEITENAIRBAG
DISPOSITIF D'AIRBAG LATÉRAL

(30) Priority: 24.10.2018 JP 2018199634; 17.09.2019 JP 2019168286
(43) Date of publication of application: 29.04.2020
(73) Proprietor: Autoliv Development AB, 447 83 Vårgårda (SE)
(72) Inventor: FUMA, Makoto, Yokohama-shi, Kanagawa 2220033 (JP); KOBAYASHI, Yuto, Yokohama-shi, Kanagawa 2220033 (JP)
(74) Representative: Müller Verweyen

(56) References cited:
- US-A1- 2012 091 697
- US-A1- 2013 113 193
- US-A1- 2014 151 984
- US-A1- 2017 232 922

## Description

### [TECHNICAL FIELD]

The present invention relates to, for example, a side airbag apparatus which is provided in a vehicle to protect a passenger when the vehicle is impacted from the side (hereinafter, referred to as "upon a side collision"). The present invention specifically relates to a side airbag apparatus which is effective when installed on the central side in the width direction of a vehicle separate from a side door (for example, the side on the passenger seat side in the case of the driver seat and the side on the driver seat side in the case of a passenger seat) (hereinafter, referred to as the far side).

Hereinafter, in the present application, "up (upper)" and "above" mean the head direction of the passenger seated in the regular state, while "down (lower)" and "below" similarly mean the foot direction. Moreover, "anterior" and "front" mean the front side of the passenger seated in the regular state, while "posterior" and "rear" similarly mean the back side direction. Moreover, "left and right direction" means the width direction of the vehicle.

### [BACKGROUND]

For example, a side airbag apparatus which suppresses a passenger from moving towards a region (where an impact is applied) upon a collision so as to protect this passenger is installed in the lateral inside of a backrest part of a seat (hereinafter, referred to as a seat back).

This side airbag apparatus is configured such that for example, upon a side collision, an output signal transmitted by a sensor (which has detected an impact) operates an inflator so as to generate gas, in order to deploy a cushion on the side of the passenger seated in the seat.

If the side airbag apparatus is installed on the side near a side door (near side), when the passenger collides with the cushion after being deployed, the movement of the cushion towards the region where the impact is applied is prevented via the reception of reaction force from the side door, making it possible to suppress the passenger from moving.

Unfortunately, if the side airbag apparatus is installed on the far side, just as if installed on the near side, there is no side door to prevent the cushion from moving towards the region where the impact is applied. Therefore, in order to suppress the passenger from moving, the deployed cushion must be held to suppress the movement towards the region where the impact is applied.

If the side airbag apparatus is installed on the far side, the movement of the deployed cushion is particularly required to be more suppressed, for example, when a passenger is not seated in the passenger seat than when passengers are seated in both the driver seat and the passenger seat.

With that, in the side airbag apparatus installed on the far side, when the passenger collides with the deployed cushion, various configurations for suppressing the cushion from moving towards the region where the impact is applied have been proposed.

For example, Patent Document 1 discloses a side airbag apparatus, wherein a subcushion, which is deployed from an intermediate part in the upper direction to above the center console box, is provided on a main cushion, with the main cushion being made to have a lower part thereof interposed between the passenger and a center console box during deployment.

In the case of the side airbag apparatus disclosed in this Patent Document 1, during deployment, the lower part of the main cushion and the subcushion interfere with the center console box, thereby suppressing the main cushion from moving towards the region where the impact is applied.

Unfortunately, in the case of the side airbag apparatus disclosed in Patent Document 1, the length (height) in the vertical direction of the center console box which interferes with the main cushion and the subcushion is limited. Therefore, if the passenger collides with the main deployed cushion, the movement of the passenger towards the region where the impact is applied cannot be sufficiently suppressed.

### [Related Art Documents]

### [Patent Documents]

Patent Document 1: JP 2014-69729 A Patent Document 2: US2013/113193 A1 discloses a side airbag apparatus, comprising a cushion that is provided on the side part on the central side in the width direction of a backrest part in either one of one seat or the other seat disposed in parallel in the width direction of a vehicle and restrains a passenger from moving towards a region where an impact is applied upon a collision so as to protect this passenger, wherein: an inflator that receives a signal from a sensor, generates gas, and deploys the cushion is provided inside the cushion,the cushion comprises: a main chamber, and a subchamber which is provided on a base cloth panel opposite a base cloth panel on the passenger side of the main chamber with which a passenger seated in the one seat is in contact.

### [SUMMARY OF THE INVENTION]

### [Problem to be Solved by the Invention]

A problem solved by the present invention is that, in the side airbag apparatus for allowing the main cushion and the subcushion to interfere with the center console box in Patent Document 1, upon a collision of a vehicle, the movement of the cushion caused by the movement of the passenger towards the region (where the impact is applied) cannot be sufficiently suppressed.

### [Means for Solving the Problem]

In order to solve the problem, an object of the present invention is to effectively suppress the movement of a cushion caused by the movement of a passenger towards a region where an impact is applied even if the passenger is only seated in the driver seat and when the passenger collides with the deployed cushion.

That is, the present invention is a side airbag apparatus as defined by claim 1.

An inflator which receives a signal from a sensor, generates gas, and deploys the cushion is provided inside the cushion.

In addition, in the present invention, the cushion includes: a main chamber, and a subchamber that is provided on a base cloth panel opposite a base cloth panel on the passenger side of the main chamber (with which a passenger seated in the one seat is in contact).

In the abovementioned present invention, for example, when the side on the other seat side is impacted and the passenger seated in the one seat moves in the direction of the other seat side, the deployed subchamber interferes with a side support part on the one seat side formed in the seat back of the other seat. In addition, this interference applies reaction force from the other seat to the deployed main chamber. Therefore, when the abutting position between the subchamber and the side support part on the one seat side of the other seat is set to the optimal position in the vertical direction, the main chamber can effectively suppress the passenger seated in the one seat from moving in the direction of the other seat side. The optimal abutting position between the subchamber and the other seat is the vertical direction position which can most effectively suppress the movement of the main chamber in the direction in which the impact acts, with the position being the vertical direction position at which the shoulder region of the passenger (who has moved in the direction on which the impact acts) abuts the main chamber.

In the present invention, the main chamber is installed in either the side part on the far side of the seat back of the one seat or the side part on the far side of the seat back of the other seat.

In addition, if the main chamber is installed on the one seat, the subchamber is mounted on the main chamber such that the subchamber is deployed on the front side of the side support part on the one seat side of the seat back of the other seat. Alternatively, the subchamber is mounted on the main chamber such that the subchamber is deployed on the side on the one seat side of the side support part on the one seat side of the seat back of the other seat.

In so doing, when the passenger seated in the one seat moves in the direction of the other seat side, in the former case, the subchamber abuts the side (on which the passenger in the other seat is seated), on the side support part on the one seat side formed on the other seat. In contrast, in the latter case, the subchamber abuts the side on the one seat side of the side support part on the one seat side of the seat back of the other seat, or the side and the front thereof. The abutting thereof can effectively suppress the passenger seated in the one seat from moving in the direction of the other seat side.

At this time, the main chamber is sectioned into a vehicle front side chamber and a vehicle rear side chamber, and the subchamber is installed on the vehicle front side chamber thereof, gas flows in the order of the vehicle rear side chamber, the vehicle front side chamber, and the subchamber so as to induce smooth deployment.

In contrast, in an example which is not part of the present invention, the main chamber is sectioned into a vehicle front side chamber and a vehicle rear side chamber, and the subchamber is installed on the vehicle rear side chamber thereof, gas flows from the vehicle rear side chamber to the subchamber and the vehicle front side chamber so as to induce smooth deployment.

Moreover, if the main part of the vehicle rear side chamber is deployed in the side support of the driver seat when the cushion is deployed, the passenger can be more assuredly moved away from the collision side. Should a passenger that is out of position not be seated in the regular position, unnecessary damage can be reduced without applying excessive deployment pressure to the passenger. The main part of the vehicle rear side chamber is the part within the widest possible range of the vehicle rear side chamber including the periphery of the part in which the inflator is disposed.

In contrast, if the main chamber is installed on the other seat, the subchamber is mounted on the main chamber such that the subchamber is deployed on the one seat side of the side support part on the one seat side formed on the seat back of the other seat. In so doing, during deployment, the main chamber can be disposed at substantially the same position in the left and right direction as in the case in which the main chamber is installed on the one seat.

### [Effects of the Invention]

In the present invention, upon a collision, the deployed subchamber can interfere with the passenger seat serving as the other seat so as to apply reaction force from the passenger seat to the deployed main chamber. Therefore, even if a passenger is only seated in the driver seat serving as one seat and the passenger seat is a vacant seat, the passenger seated in the driver seat can be effectively suppressed from moving in the direction of the passenger seat side.

### [BRIEF DESCRIPTION OF THE DRAWINGS]

FIG. 1 is a view illustrating Example 1 of a side airbag apparatus according to the present invention installed in a seat back on the far side of the driver seat, wherein FIG. 1(a) is a view illustrating the state prior to folding a cushion, while FIG. 1(b) is an enlarged cross sectional view along A-Aof FIG. 1(a).
FIG. 2(a) is a view of the deployed state of the side airbag apparatus according to the present invention illustrated in FIG. 1, when seen from above a vehicle, while FIG. 2(b) is a view of the state in which a passenger in the driver seat moves from the state of FIG. 2(a) to the passenger seat side so as to be held by the deployed cushion, when seen from above the vehicle.
FIG. 3 is a view describing Example 2 of the side airbag apparatus which is not part of the present invention installed in a seat back on the far side of the passenger seat, wherein FIG. 3(a) is a view illustrating the state prior to folding the cushion, while FIG. 3(b) is an enlarged cross sectional view along B-B of FIG. 3(a).
FIG. 4 is a view of the side airbag apparatus illustrated in FIG. 3, identical to FIG. 2.
FIG. 5 is a view identical to FIG. 2 describing Example 3 of the side airbag apparatus according to the present invention installed in the seat back on the far side of the driver seat.
FIG. 6 is a view identical to FIG. 2 describing Example 4 of the side airbag apparatus according to the present invention installed in the seat back on the far side of the driver seat.
FIG. 7 is a view identical to FIG. 2 describing Example 5 of the side airbag apparatus according to the present invention installed in the seat back on the far side of the driver seat.

### [DESCRIPTION OF THE PREFERRED EMBODIMENT]

An object of the present invention is to effectively suppress the movement of a cushion caused by the movement of a passenger towards a region on which an impact is applied even if the passenger is only seated in the driver seat and when the passenger collides with the deployed cushion.

The present invention achieves the object by allowing the cushion (which restrains the movement of the passenger towards the region (on which the impact is applied) upon a collision) to be configured to include a main chamber and a subchamber, such that the deployed subchamber interferes with the passenger seat so as to apply reaction force from the passenger seat to the deployed main chamber.

### [Examples]

Examples of the present invention will hereinafter be described with reference to the appended drawings.

### (Example 1)

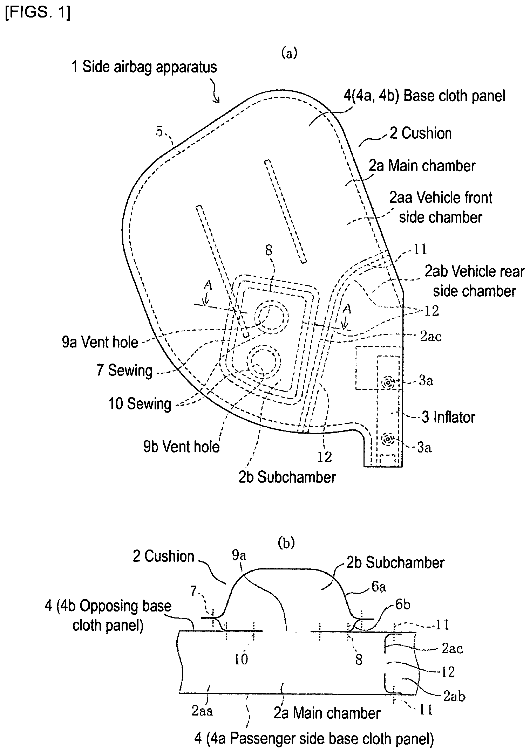

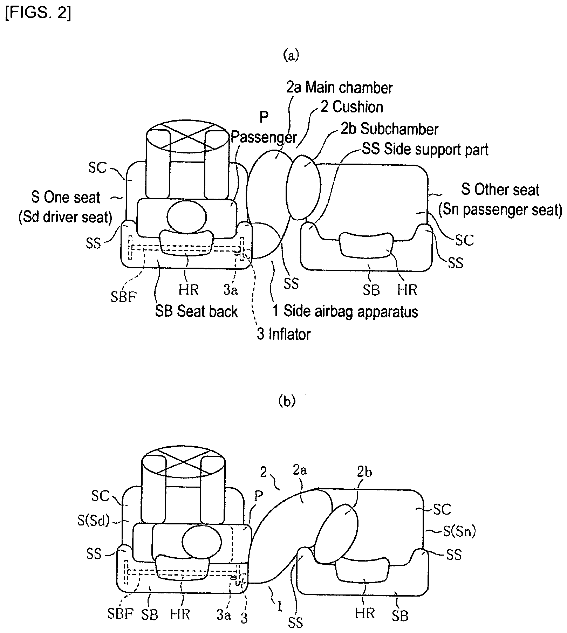

FIGS. 1 and 2 are views illustrating Example 1 of a side airbag apparatus according to the present invention.

A side airbag apparatus 1 according to the present invention is mounted on a seat back frame SBF inside a seat back SB, in a seat frame functioning as the framework of a seat S consisting of a seat cushion SC, a seat back SB, and a head rest HR. Hereinafter, one seat serving as the driver seat is referred to as Sd, while the other seat serving as a passenger seat is referred to as Sn.

In this side airbag apparatus 1, for example, a cylindrical inflator 3 which receives an output signal from a sensor and emits gas from the outer side thereof into the cushion 2 is disposed inside a cushion 2.

Two stud bolts 3a are provided on the outer side of this inflator 3 with an appropriate interval therebetween in the longitudinal direction so as to protrude, such that the cushion 2 is mounted on the seat back frame SBF using these stud bolts 3a.

The cushion 2 includes a main chamber 2a and a subchamber 2b. As illustrated in FIG. 1, the main chamber 2a of these is formed in a bag shape, for example, by sewing 5 the outer peripheral part of one symmetrically formed base cloth panel 4, such that the vertical direction is longer than the anteroposterior direction while the left and right direction is thick.

In contrast, the subchamber 2b is formed in a bag shape by, for example, sewing 7 the outer peripheral side of two base cloth panels 6a, 6b, and mounted on a base cloth panel 4b opposite a base cloth panel 4a on the passenger side of the main chamber 2a (with which a passenger P seated in the driver seat Sd is in contact).

The subchamber 2b is mounted on the opposing base cloth panel 4b, for example, by sewing 8 the outer peripheral side of one the base cloth panel 6b of the subchamber 2b to the opposing base cloth panel 4b. In addition, vent holes 9a, 9b for allowing the gas generated in the inflator 3 to flow from the main chamber 2a to the subchamber 2b are provided at two locations inside this sewing 8, for example. The main chamber 2a (opposing base cloth panel 4b) and the subchamber 2b (base cloth panel 6b) are also sewn 10 on the periphery of these vent holes 9a, 9b.

In Example 1, the main chamber 2a is sectioned into a vehicle front side chamber 2aa and a vehicle rear side chamber 2ab via a partitioning cloth 2ac sewn 11 to this main chamber 2a.

A vent hole 12 is also provided at the partitioning cloth 2ac so as to allow the gas generated in the inflator 3 to flow from the vehicle rear side chamber 2ab to the vehicle front side chamber 2aa.

The vent hole 12 is provided, for example, at substantially the same vertical height position as the vent holes 9a, 9b, as well as the position above the vent hole 9a. When the vent hole 12 is provided at this position, the gas generated in the inflator 3 is smoothly introduced from the vehicle rear side chamber 2ab to the subchamber 2b via the vehicle front side chamber 2aa.

In addition, upon a collision, the subchamber 2b is mounted in the vicinity of the vehicle front side chamber 2aa, for example, in the vicinity of the vehicle rear side chamber 2ab such that the subchamber 2b is deployed on the front side of a side support part SS on the driver seat side formed on the seat back SB of a passenger seat Sn (see FIGS. 1(a) and 2(a)).

In contrast, when the inflator 3 is installed in the vehicle rear side chamber 2ab, the main chamber 2a is mounted on the side part on the passenger seat side of the seat back SB of the driver seat Sd via this inflator 3.

The subchamber 2b is smoothly deployed on the front side of the side support part SS of the passenger seat Sn upon a collision, in addition to abutting the side (on which the passenger of the passenger seat of the side support part SS on the driver seat side of the passenger seat Sn is seated) by the movement of the passenger P in the direction of the passenger seat side as illustrated in FIG. 2(b).

The interference between this subchamber 2b and the side support part SS on the driver seat side of the passenger seat Sn allows reaction force from the passenger seat Sn to be applied to the deployed main chamber 2a, making it possible to effectively suppress the passenger P seated in the driver seat from moving in the direction of the passenger seat side.

If the gas generated in the inflator 3 is smoothly supplied to the subchamber 2b, the subchamber 2b is preferably mounted on the main chamber 2a in the vicinity of the vertical direction position such that the shoulder part of the passenger P after the movement abuts the main chamber 2a.

### (Example 2)

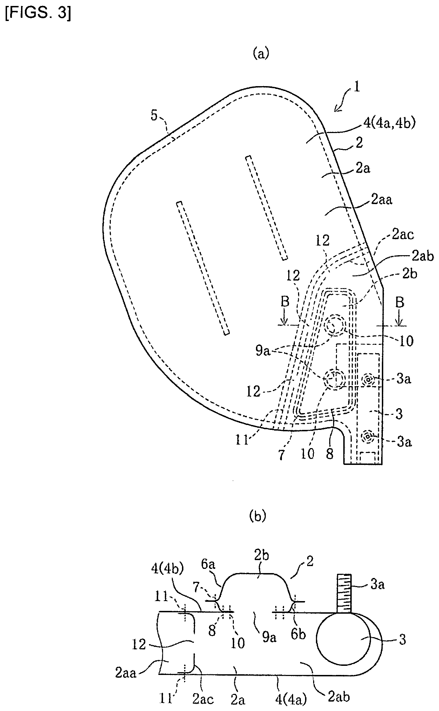

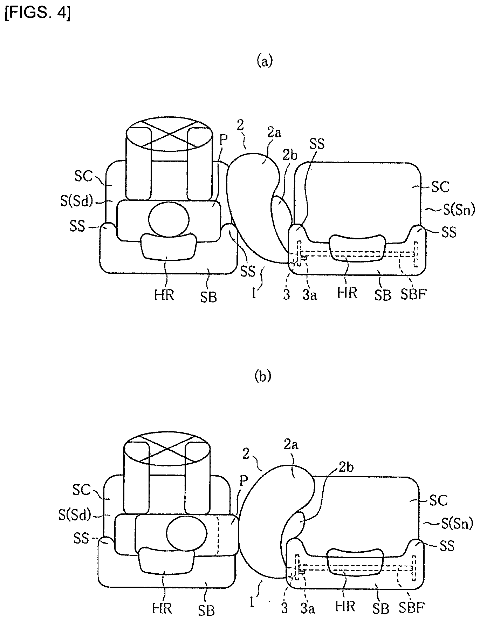

FIGS. 3 and 4 are views illustrating Example 2 of a side airbag apparatus which is not part of the present invention. Note that in FIGS. 3 and 4, detailed descriptions of the same symbols as in FIGS. 1 and 2 are omitted by indicating equivalent components or corresponding components.

In Example 2 illustrated in FIGS. 3 and 4, the main chamber 2a is provided on the passenger seat Sn. Also in this Example 2, as in Example 1, the main chamber 2a is sectioned into the vehicle front side chamber 2aa and the vehicle rear side chamber 2ab via the partitioning cloth 2ac.

In addition, in this Example 2, the subchamber 2b is mounted on the vehicle rear side chamber 2ab, wherein, upon a collision, as illustrated in FIG. 4(a), the subchamber 2b is deployed on the driver seat side of the side support part SS on the driver seat side of the seat back SB of the passenger seat Sn.

In so doing, during deployment, the main chamber 2a can be disposed at substantially the same position in the left and right direction as in Example 1.

Unlike Example 1 (in which the subchamber 2b is mounted on the vehicle front side chamber 2aa), in Example 2, for example, the vent hole 12 provided at the partitioning cloth 2ac is provided at three equally divided positions in the vertical direction of the partitioning cloth 2ac. When the vent hole 12 is provided at this position, the gas generated in the inflator 3 is smoothly introduced from the vehicle rear side chamber 2ab to the vehicle front side chamber 2aa. Note that the gas is directly introduced from the vehicle rear side chamber 2ab to the subchamber 2b.

As illustrated in FIG. 4(a), this subchamber 2b is deployed on the driver seat side of the side support part SS of the passenger seat Sn upon a collision. In addition, when the passenger P moves in the direction of the passenger seat side, as illustrated in FIG. 4(b), the subchamber 2b abuts the side and the front on the driver seat side of the side support part SS on the driver seat side of the seat back SB of the passenger seat Sn so as to apply reaction force from the passenger seat Sn to the main chamber 2a. In addition, this reaction force can effectively suppress the passenger P from moving in the direction of the passenger seat side.

### (Example 3)

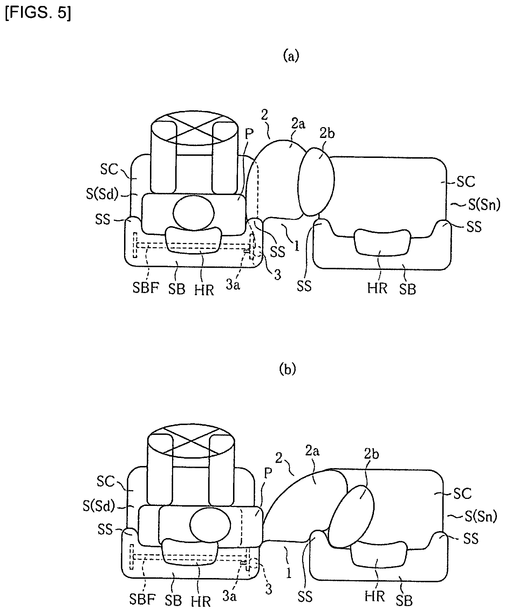

FIG. 5 is a view illustrating Example 3 of the side airbag apparatus according to the present invention. Note that in FIG. 5, detailed descriptions of the same symbols as in FIG. 2 are omitted by indicating equivalent components or corresponding components.

In Example 3 illustrated in FIG. 5, upon a collision, the main part of the vehicle rear side chamber 2ab according to Example 1 is deployed in the side support part SS on the passenger seat side of the seat back SB of the driver seat Sd.

Specifically, the mounting position of the inflator 3 on the vehicle rear side chamber 2ab is moved forward from the rearmost part as in Example 1, wherein during deployment, the majority of the vehicle rear side chamber 2ab is housed inside the side support part SS. In the example illustrated in FIG. 5, when deployed, the cushion 2 is deployed from the front side of the side support part SS.

In so doing, the passenger P can be more assuredly moved away from the passenger seat Sn serving as the collision side. Therefore, should the passenger P seated in the driver seat be out of position, etc., excessive deployment pressure is not applied to the passenger P, making it possible to reduce unnecessary damage. Note that out of position means a state in which the passenger P is not seated in the regular position, for example, the state in which the passenger is seated while sharply bending forward, etc.

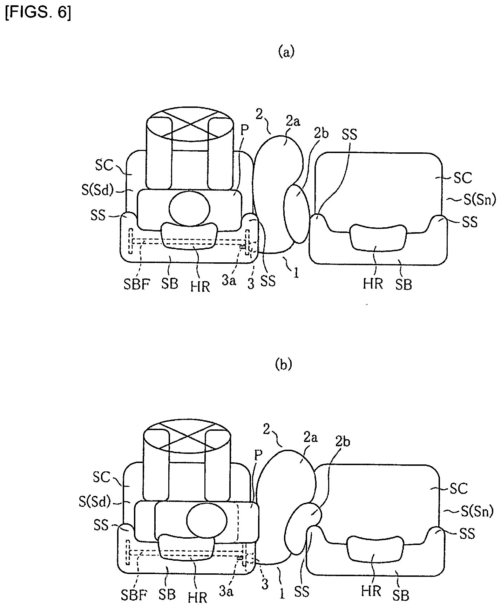

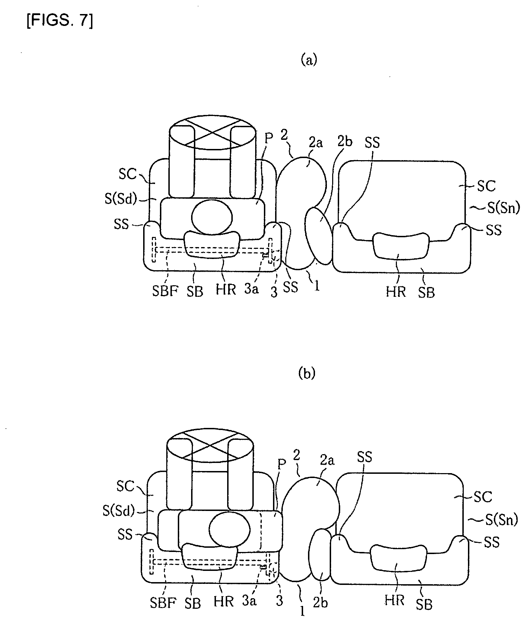

For example, instead of Example 1, upon a collision, as illustrated in FIGS. 6, 7, as in Example 2, and not being part of the present invention, the subchamber 2b may be deployed on the driver seat side of the side support part SS on the driver seat side of the seat back SB of the passenger seat Sn.

In the case of FIGS. 6, 7 illustrated in these Examples 4 and 5, and not being part of the present invention, the subchamber 2b is mounted on the vehicle rear side chamber 2ab.

In addition, in Example 4 of FIG. 6, when the passenger P moves in the direction of the passenger seat side upon a collision, as in FIG. 6(b), the deployed subchamber 2b abuts the side and the front on the driver seat side of the side support part SS of the seat back SB of the passenger seat Sn.

In contrast, in Example 5 of FIG. 7, when the passenger P moves in the direction of the passenger seat side upon a collision, as in FIG. 6(b), the deployed subchamber 2b abuts the side on the driver seat side of the side support part SS of the seat back SB of the passenger seat Sn.

Therefore, also in Examples 4 and 5 illustrated in these FIGS. 6 and 7, the reaction force applied from the passenger seat Sn to the deployed main chamber 2a can effectively suppress the passenger P from moving in the direction of the passenger seat side.

### [Reference Numerals]

1 Side airbag apparatus
2 Cushion
2a Main chamber
2aa Vehicle front side chamber
2ab Vehicle rear side chamber
2b Subchamber
3 Inflator
4 Base cloth panel
4a Passenger side base cloth panel
4b Opposing base cloth panel
9a, 9b Vent hole
10 Sewing
S Seat
Sd One seat (driver seat)
S Other seat (Sn passenger seat)
SB Seat back
SS Side support part
SBF Seat back frame
P Passenger

## Claims

1. A side airbag apparatus (1), comprising a cushion (2) that is provided on the side part on the central side in the width direction of a backrest part in either one of one seat (Sd) or the other seat (S) disposed in parallel in the width direction of a vehicle and restrains a passenger (P) from moving towards a region (where an impact is applied) upon a collision so as to protect this passenger (P), wherein:
an inflator (3) that receives a signal from a sensor, generates gas, and deploys the cushion (2) is provided inside the cushion (2),
**characterized in that**
the cushion (2) comprises: a main chamber (2a), and a subchamber (2b) which is provided on a base cloth panel (4) opposite a base cloth panel (4a) on the passenger side of the main chamber (2a) with which a passenger (P) seated in the one seat (Sd) is in contact, and
, wherein the main chamber (2a) is sectioned into a vehicle front side chamber (2aa) and a vehicle rear side chamber (2ab), with the subchamber (2b) mounted on the vehicle front side chamber (2aa).

2. The side airbag apparatus (1) according to claim 1, wherein, when the passenger (P) moves in the direction from the one seat (Sd) towards the other seat side upon a collision, the deployed subchamber (2b) abuts the side where a passenger (P) in the other seat (S) is seated, on the side support part (SS) on the one seat side formed on the other seat (S).

3. The side airbag apparatus (1) according to claim 1, wherein, when the passenger (P) moves in the direction from the one seat (Sd) towards the other seat side upon a collision, the deployed subchamber (2b) abuts the side on the one seat side, on the side support part (SS) on the one seat side formed on the other seat (S).

4. The side airbag apparatus (1) according to claim 1, wherein, when the passenger (P) moves in the direction from the one seat (Sd) towards the other seat side upon a collision, the deployed subchamber (2b) abuts the side and the front on the one seat side, on the side support part (SS) on the one seat side formed on the other seat (S).

5. The side airbag apparatus (1) according to any one of claims 1 to 4, wherein the main part of the vehicle rear side chamber (2ab) is deployed in the side support part (SS) upon a collision.

6. The side airbag apparatus (1) according to any one of claims 1 to 5, wherein the main chamber (2a) is provided on the side part on the central side of the backrest part of the one seat (Sd) in the width direction of the vehicle.

7. The side airbag apparatus (1) according to any one of claims 1 to 5, wherein the main chamber (2a) is provided on the side part on the central side of the backrest part of the other seat (S) in the width direction of the vehicle.

8. The side airbag apparatus (1) according to any one of claims 1 to 7, wherein a vent hole (9a,9b) in which the gas generated in the inflator (3) flows is provided in mounting parts of the subchamber (2b) and the main chamber (2a), with the subchamber (2b) and the main chamber (2a) coupled by sewing the periphery of the vent hole (9a,9b) and the outer peripheral part of the subchamber (2b).

9. The side airbag apparatus (1) according to any one of claims 1 to 8, wherein the subchamber (2b) is mounted in the vicinity of the position at which the shoulder region of the passenger (P) abuts the main chamber (2a).

## Patentansprüche

1. Seitenairbageinrichtung (1), die ein Kissen (2) umfasst, das an dem Seitenteil an der Mittelseite in der Breitenrichtung eines Rückenlehnenteils in entweder einem von einem Sitz (Sd) oder dem anderen Sitz (S) parallel in der Breitenrichtung eines Fahrzeugs bereitgestellt ist und einen Insassen (P) daran hindert, sich bei einer Kollision auf einen Bereich zu (in dem ein Aufprall angewendet wird) zu bewegen, so dass dieser Insasse (P) geschützt wird, wobei:
ein Gasgenerator (3), der ein Signal von einem Sensor empfängt, Gas erzeugt und das Kissen (2) entfaltet, innen in dem Kissen (2) bereitgestellt ist,
**dadurch gekennzeichnet, dass**
das Kissen (2) Folgendes umfasst: eine Hauptkammer (2a) und eine Unterkammer (2b), die auf einer Grundstoffbahn (4) gegenüber einer Grundstoffbahn (4a) auf der Insassenseite der Hauptkammer (2a) bereitgestellt sind, mit der ein Insasse (P), der auf dem einen Sitz (Sd) sitzt, in Berührung ist, und wobei die Hauptkammer (2a) in eine Fahrzeugvorderseitenkammer (2aa) und eine Fahrzeugrückseitenkammer (2ab) unterteilt ist, wobei die Unterkammer (2b) an der Fahrzeugvorderseitenkammer (2aa) montiert ist.

2. Seitenairbageinrichtung (1) nach Anspruch 1, wobei, wenn sich der Insasse (P) bei einer Kollision in der Richtung von dem einen Sitz (Sd) auf die andere Sitzseite zu bewegt, die entfaltete Unterkammer (2b) an die Seite anstößt, an der ein Insasse (P) auf dem anderen Sitz (S) sitzt, an dem Seitenstützteil (SS) an der einen Sitzseite, die an dem anderen Sitz (S) ausgebildet ist.

3. Seitenairbageinrichtung (1) nach Anspruch 1, wobei, wenn sich der Insasse (P) bei einer Kollision in der Richtung von dem einen Sitz (Sd) auf die andere Sitzseite zu bewegt, die entfaltete Unterkammer (2b) an die Seite an der einen Sitzseite anstößt, an dem Seitenstützteil (SS) an der einen Sitzseite, die an dem anderen Sitz (S) ausgebildet ist.

4. Seitenairbageinrichtung (1) nach Anspruch 1, wobei, wenn sich der Insasse (P) bei einer Kollision in der Richtung von dem einen Sitz (Sd) auf die andere Sitzseite zu bewegt, die entfaltete Unterkammer (2b) an die Seite und die Vorderseite an der einen Sitzseite anstößt, an dem Seitenstützteil (SS) an der einen Sitzseite, die an dem anderen Sitz (S) ausgebildet ist.

5. Seitenairbageinrichtung (1) nach einem der Ansprüche 1 bis 4, wobei der Hauptteil der hinteren Fahrzeugseitenkammer (2ab) bei einer Kollision in dem Seitenstützteil (SS) entfaltet wird.

6. Seitenairbageinrichtung (1) nach einem der Ansprüche 1 bis 5, wobei die Hauptkammer (2a) an dem Seitenteil an der Mittelseite des Rückenlehnenteils des einen Sitzes (Sd) in der Breitenrichtung des Fahrzeugs bereitgestellt ist.

7. Seitenairbageinrichtung (1) nach einem der Ansprüche 1 bis 5, wobei die Hauptkammer (2a) an dem Seitenteil an der Mittelseite des Rückenlehnenteils des anderen Sitzes (Sd) in der Breitenrichtung des Fahrzeugs bereitgestellt ist.

8. Seitenairbageinrichtung (1) nach einem der Ansprüche 1 bis 7, wobei eine Entlüftungsöffnung (9a, 9b), in dem das Gas, das von dem Gasgenerator (3) erzeugt wird, strömt, in Montageteilen der Unterkammer (2b) und der Hauptkammer (2a) bereitgestellt ist, wobei die Unterkammer (2b) und die Hauptkammer (2a) durch Nähen des Umfangs der Entlüftungsöffnung (9a, 9b) und des Außenumfangsteils der Unterkammer (2b) gekoppelt sind.

9. Seitenairbageinrichtung (1) nach einem der Ansprüche 1 bis 8, wobei die Unterkammer (2b) in der Nähe der Position montiert ist, an der der Schulterbereich des Insassen (P) an die Hauptkammer (2a) anstößt.

## Revendications

1. Appareil de sac gonflable latéral (1), comprenant un coussin (2) qui est prévu sur la partie latérale du côté central dans le sens de la largeur d'une partie de dossier dans l'un d'un siège (Sd) ou de l'autre siège (S) disposé en parallèle dans le sens de la largeur d'un véhicule et empêche un passager (P) de se déplacer vers une région (où un impact est appliqué) lors d'une collision de manière à protéger ce passager (P) :
un gonfleur (3) qui reçoit un signal provenant d'un capteur, génère du gaz et déploie le coussin (2), étant prévu à l'intérieur du coussin (2),
**caractérisé en ce que** le coussin (2) comprend :
une chambre principale (2a) et une sous-chambre (2b) qui est prévue sur un panneau de tissu de base (4) opposé à un panneau de tissu de base (4a) du côté passager de la chambre principale (2a) avec laquelle un passager (P) assis dans l'un des sièges (Sd) est en contact, et,
la chambre principale (2a) étant sectionnée en une chambre latérale avant du véhicule (2aa) et une chambre latérale arrière du véhicule (2ab), la sous-chambre (2b) étant montée sur la chambre latérale avant du véhicule (2aa).

2. Appareil de sac gonflable latéral (1) selon la revendication 1, lorsque le passager (P) se déplace dans la direction d'un siège (Sd) vers l'autre côté du siège lors d'une collision, la sous-chambre déployée (2b) venant en butée contre le côté où un passager (P) dans l'autre siège (S) est assis, sur la partie d'appui latéral (SS) de l'un côté de siège formé sur l'autre siège (S).

3. Appareil de sac gonflable latéral (1) selon la revendication 1, lorsque le passager (P) se déplace dans la direction d'un siège (Sd) vers l'autre côté du siège lors d'une collision, la sous-chambre déployée (2b) venant en butée contre le côté sur l'un côté du siège, sur la partie d'appui latéral (SS) de l'un côté du siège formé sur l'autre siège (S).

4. Appareil de sac gonflable latéral (1) selon la revendication 1, lorsque le passager (P) se déplace dans la direction d'un siège (Sd) vers l'autre côté du siège lors d'une collision, la sous-chambre déployée (2b) venant en butée contre le côté et l'avant sur l'un côté du siège, sur la partie d'appui latéral (SS) de l'un côté du siège formé sur l'autre siège (S).

5. Appareil de sac gonflable latéral (1) selon l'une quelconque des revendications 1 à 4, la partie principale de la chambre latérale arrière du véhicule (2ab) étant déployée dans la partie d'appui latéral (SS) lors d'une collision.

6. Appareil de sac gonflable latéral (1) selon l'une quelconque des revendications 1 à 5, la chambre principale (2a) étant prévue sur la partie latérale sur le côté central de la partie de dossier d'un siège (Sd) dans le sens de la largeur du véhicule.

7. Appareil de sac gonflable latéral (1) selon l'une quelconque des revendications 1 à 5, la chambre principale (2a) étant prévue sur la partie latérale du côté central de la partie de dossier de l'autre siège (S) dans le sens de la largeur du véhicule.

8. Appareil de sac gonflable latéral (1) selon l'une quelconque des revendications 1 à 7, un orifice d'aération (9a, 9b) dans lequel s'écoule le gaz généré dans le gonfleur (3) étant prévu dans les parties de montage de la sous-chambre (2b) et la chambre principale (2a), avec la sous-chambre (2b) et la chambre principale (2a) accouplées en cousant la périphérie du trou d'aération (9a, 9b) et la partie périphérique externe de la sous-chambre (2b).

9. Appareil de sac gonflable latéral (1) selon l'une quelconque des revendications 1 à 8, la sous-chambre (2b) étant montée à proximité de la position à laquelle la région d'épaule du passager (P) vient en butée contre la chambre principale (2a).
